# EUROPÄISCHE PATENTANMELDUNG

(11) **EP 4 685 357 A1**
(43) Veröffentlichungstag der Anmeldung: **28.01.2026**
(21) Anmeldenummer: 25190118.7
(22) Anmeldetag: 17.07.2025
(51) Int. Cl.: F15B 13/043, F15B 21/08, F15B 19/00, G05B 19/46, G05D 3/12, G05D 16/20, F16K 37/00, G05B 11/01, F15B 13/04

(54) **AUTOMATISCHE OFFSET KOMPENSATION FÜR LAGEGEREGELTE PROPORTIONALVENTILE**

(30) Priorität: 25.07.2024 DE 102024206994
(71) Anmelder: Robert Bosch GmbH, 70442 Stuttgart (DE)
(72) Erfinder: Knoll, Frank, 63571 Gelnhausen (DE)

(57) **Zusammenfassung**

Die vorliegende Erfindung betrifft eine Offset-Kompensation für einen Positions-Offset eines Pilotventils 10 für ein lagegeregeltes Proportionalventil 20, die einen geschalteten Integrator 3 mit einem Verzögerungsglied 2 mit einer vorab festgelegten Zeitkonstante, eine Offset-Kompensationslogik 5, die sicherstellt, dass der Integrator nur aktiv ist, wenn sich weder Soll- noch Istposition des Proportionalventils ändert, so dass das Proportionalventil stillsteht, und einen Integrierer umfasst, der eventuelle zu einem Offset führende Regelfehler aufaddiert, bis ein Offset-Fehler vollständig kompensiert ist.

## Beschreibung

### Technisches Gebiet

Die vorliegende Offenbarung betrifft eine neuartige Regelung für lagegeregelte Proportionalventile. Insbesondere betrifft die Offenbarung eine Offset-Kompensation für Ventile, die über ein Pilotventil vorsteuerbar sind.

Herkömmlich sind vorgesteuerte lagegeregelte Proportionalventile bekannt. Als vorgesteuerte Ventile werden Ventile bezeichnet, bei denen das Umschalten bzw. Einstellen der gewünschten Stellung bei Proportionalventilen über ein sogenanntes Pilotventil erfolgt, das mit geringeren Drücken und/oder Durchflüssen arbeitet und dadurch weniger Energie zur Ansteuerung als das "eigentliche" Proportionalventil benötigt. Beispiele für derartige lagegesteuerte Ventile finden sich in der Bosch-Geräteserie "4X", in der vorgesteuerte Regel-Wegeventile als Beispiel für lagegeregelte Proportionalventile aufgeführt sind. Betriebsdrücke bis 350 bar und maximale Volumenströme bis 1850 l/min werden für derartige Ventile genannt.

Erfindungsgemäß wurde festgestellt, dass bei Abweichungen zwischen einer (elektronisch erfassten) Ventil-Istposition und dem hydraulischen Nullpunkt der Pilotventile (im Folgenden auch kurz: "Piloten") bei vorgesteuerten Ventilen Offsetfehler bzw. Versatzfehler auftreten können. Mit anderen Worten meldet das "Haupt"-Ventil in seiner gewünschten Position eine Abweichung von derselben, wodurch eine Regelung ausgelöst wird, die das Ventil in eine falsche Position neben der gewünschten Position steuert. Durch die Abweichungen des Pilotventils ergeben sich dann in der Hauptstufe, also beim "eigentlichen" Proportionalventil, Positionsfehler, weil die Steuerung die Position des Hauptventils über den Positions-Offset des Pilotventils (falsch) einschätzt. Dies könnte bei den genannten hohen Drücken und dadurch erzeugten hohen Kräften zu schweren Fehlern führen. Im schlechtesten Fall ("Worst-Case") könnte sich der Offset verstärken und der geregelte Aufbau dadurch "durchgehen", so dass das Ventil versehentlich voll ausgesteuert würde. Die Folge wäre ein unerwünschtes Fahren eines durch das Ventil gesteuerten Verbrauchers bis zum Anschlag.

Daher ist es eine Aufgabe der vorliegenden Erfindung, den Positions-Offsetfehler des Piloten im laufenden Betrieb zu erfassen und vollständig zu kompensieren. Auf diese Weise können die Pilot-Offsetfehler über die gesamte Betriebszeit des Ventils vollständig korrigiert werden.

Diese Aufgabe wird durch eine Offset-Kompensation für einen Positions-Offset eines Pilotventils für lagegeregelte Proportionalventile gelöst, die Folgendes umfasst: Einen geschalteten Integrator mit großer Zeitkonstante, eine Logikschaltung zur Offset-Kompensation, die sicherstellt, dass der Integrator nur aktiv ist, wenn sich weder Sollnoch Istposition des Proportionalventils ändert, so dass das Proportionalventil stillsteht, und einen Integrierer, der eventuelle Regelfehler aufaddiert, bis ein Offset-Fehler vollständig kompensiert ist.

Vorzugsweise umfasst die Offset-Kompensation einen nichtflüchtigen Speicher zum Ablegen des so ermittelten Kompensationswerts vor dem Abschalten und zum Abruf des so abgelegten Werts beim Wiedereinschalten. Dadurch kann beim Aus- und Wiedereinschalten schnell auf einen letzten bekannten Offsetwert eingestellt und somit eine eventuelle weitere Veränderung schnell korrigiert werden. Weiter vorzugsweise wird der ermittelte Kompensationswert in vorab festgelegten Intervallen oder bei einer durch die Logikschaltung festgestellten Änderung des Kompensationswerts im nichtflüchtigen Speicher abgelegt. Auf diese Weise kann auch bei einem ungeregelten Herunterfahren des Systems, beispielsweise bei Not-Aus oder Stromausfall, beim Wiederanfahren auf einen passenden Startwert zurückgegriffen werden. Alternativ oder zusätzlich kann der Kompensationswert auch "nur" beim Abschalten abgelegt werden, wodurch der Wert beim Wiedereinschalten zur Verfügung steht. Bei einem Stromausfall oder einer vergleichbaren Störung kann auch dann auf den letzten gespeicherten Wert zugegriffen werden, selbst wenn dieser von einem leicht geänderten aktuell "idealen" Wert geringfügig abweichen mag.

Vorzugsweise liegt die Zeitkonstante des Integrierers im Bereich von 2 bis 20 Sekunden, besonders bevorzugt zwischen 5 und 10 Sekunden. In dieser Zeit könnte der Regelfehler durch Aufaddieren (Integrieren) zu einem großen Wert werden, so dass der Offsetfehler aufgrund dieses Werts eliminiert werden muss. Um dies auszugleichen, kann beispielsweise jeweils ein Kehrbruch der vorab festgelegten Zeitkonstante als Faktor mit einem aufzuaddierenden Regelfehler multipliziert werden. Auf diese Weise geht die über die Zeit integrierte, also aufaddierte Kompensation des Regelfehlers mit längerer Dauer gegen Null, wodurch die Kompensation möglich ist. Wie später genauer erläutert wird, wird daher basierend auf der Zeitkonstante ein Faktor erzeugt, mit dem der auszugleichende bzw. zu integrierende Fehler vor dem Aufaddieren multipliziert wird, und der mit längerer verstrichener Zeit kleiner wird. Wie vorstehend dargestellt, könnte die Zeitkonstante rechnerisch als Quotient ("Kehrbruch") in die Berechnung einfließen; grundsätzlich sind aber auch andere streng monoton fallende Funktionen (im Bereich positiver Zahlen, also mit dem Grenzwert Null) möglich, wie Funktionen basierend auf Quotienten betragsmäßig höherer Ordnung (x⁻², x⁻³ etc.) oder auch logarithmische Funktionen. Mit dem Ergebnis der gewählten Funktion wird dann jeweils der vor dieser verstrichenen Zeit festgestellte Regelfehler multipliziert und das Ergebnis zur Kompensation verwendet.

Außerdem wird die Aufgabe durch ein Verfahren gelöst, das die Schritte Integrieren durch einen Integrator bei Aktivieren des Integrators durch eine Logikschaltung erst bei Stillstand des Proportionalventils, Aufaddieren bzw. Integrieren von Regelfehlern und Ablegen bzw. Speichern eines ermittelten Kompensationswerts zum Abruf beim Wiedereinschalten umfasst. Vorteilhafte Weiterbildungen sind Gegenstand der Unteransprüche.

### Kurzbeschreibung der Figuren

Fig. 1 ist eine Darstellung zur Veranschaulichung eines vorgesteuerten Regel-Wegeventils als Beispiel eines lagegeregelten Proportionalventils, für das die erfindungsgemäße Offset-Kompensation als Integralregelung nutzbar ist;
Fig. 2 ist ein Ersatzschaubild des Regel-Wegeventils gemäß der Fig. 1; und
Fig. 3 ist eine Darstellung zur Veranschaulichung eines Systemaufbaus gemäß einem ersten Ausführungsbeispiel der vorliegenden Offenbarung.

### Beschreibung der Ausführungsbeispiele

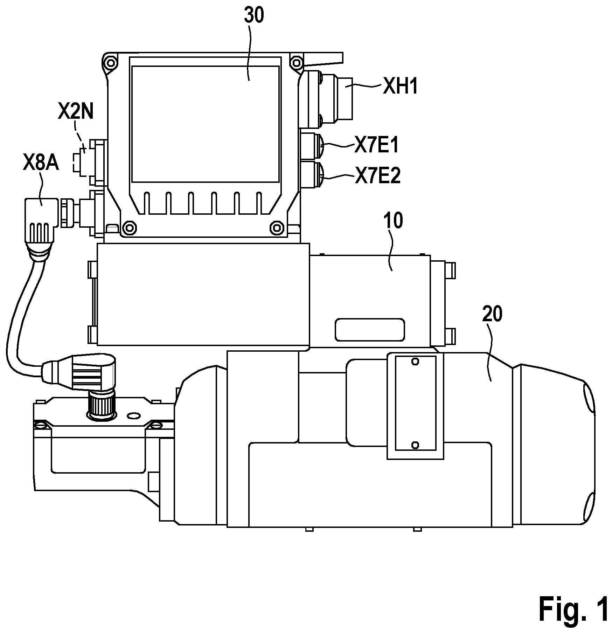

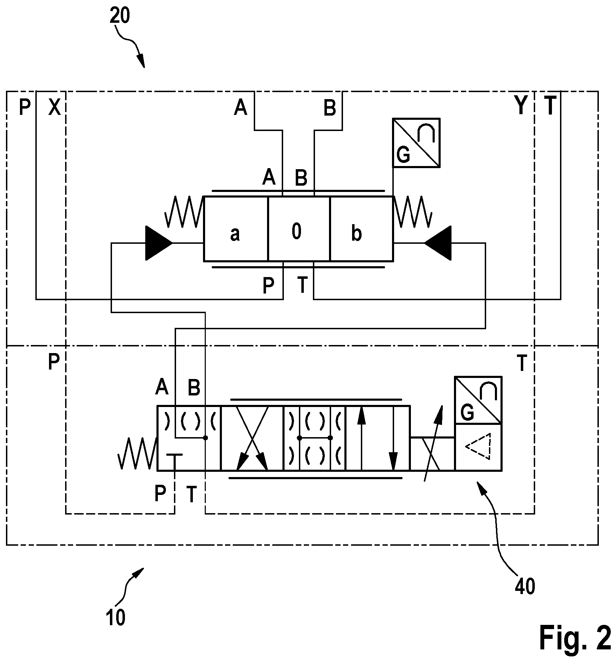

Nachstehend werden Ausführungsbeispiele der vorliegenden Offenbarung anhand der zugehörigen Figuren beschrieben. Fig. 1 zeigt einen Schnitt durch ein herkömmliches vorgesteuertes Regel-Wegeventil, für das die vorliegende Erfindung einsetzbar ist, und Fig. 2 zeigt ein entsprechendes Ersatzschaltbild.

Regel-Wegeventile nach diesem Stand der Technik haben eine 2-Wege-Funktion (hier in Fig. 2 als Proportional-3/2-Wegeventil 8 mit drei Schaltstellungen gezeigt, in denen die Anschlüsse "P" von der Pumpe und "T" zum Tank für Hydrauliköl mit zwei zu einem nicht gezeigten Verbraucher, beispielsweise einem doppeltwirkenden Hydraulikzylinder, führenden Anschlüssen "A" und "B" verbindbar sind), wie im Ersatzschaltbild der Fig. 2 verdeutlicht wird.

Das Regel-Wegeventil wie in Figur 1 dargestellt umfasst im Wesentlichen ein Vorsteuer- bzw. Pilotventil 10 mit Steuerschieber und Hülse und eine Hauptstufe 20 mit Zentrierfedern und Positionsrückführung. Ein integrierter Feldbus 30 weist weitere, für die vorliegende Erfindung nicht direkt relevante Bauteile auf, die aber hier der Vollständigkeit halber dennoch kurz aufgeführt werden, nämlich Gerätestecker, Spannungsversorgung und Sicherheitsabschaltung XH1, Ethernet-Schnittstellen X7E1, X7E2, analoge Sensorschnittstellen X2N sowie eine Schnittstelle X8A für den Wegaufnehmer der Hauptstufe. Dieser Feldbus 30 dient auch zur Integration der nachstehend erläuterten Verfahren.

Die integrierte Elektronik (OBE) des Regel-Wegeventils vergleicht einen vorgegebenen Sollwert mit einem Lage-Istwert des Steuerschiebers der Hauptstufe 20. Im Falle einer Regelabweichung wird ein Regelmagnet des Vorsteuerventils angesteuert und dessen Steuerschieber verstellt. Der über die Steuerquerschnitte freigegebene Volumenstrom am Vorsteuerventil bewirkt eine Verschiebung des Steuerschiebers des Hauptventils, dessen Hub/Steuerquerschnitt proportional zum Sollwert geregelt wird. Bei einer Sollwertvorgabe von 0 % regelt die Elektronik den Steuerschieber des Hauptventils in die Mittelstellung. Die Steuerölzuführung im Vorsteuerventil erfolgt entweder intern über den Anschluss P oder extern über den Anschluss X. Die Rückführung kann intern über den Anschluss T oder extern über den Anschluss Y zum Behälter erfolgen, wie in der Fig. 2 veranschaulicht ist.

Bei dieser Anordnung wurde erfindungsgemäß wie vorstehend erläutert das Problem festgestellt, dass bei derartig vorgesteuerten Ventilen Abweichungen zwischen der elektronisch erfassten Ventil-Istposition und einer realen Istposition des Pilotventils zu Offsetfehlern und somit zu Positionsfehlern der Hauptstufe führen können. Diese Fehler werden durch die erfindungsgemäße elektronische Steuerung erfasst und kompensiert.

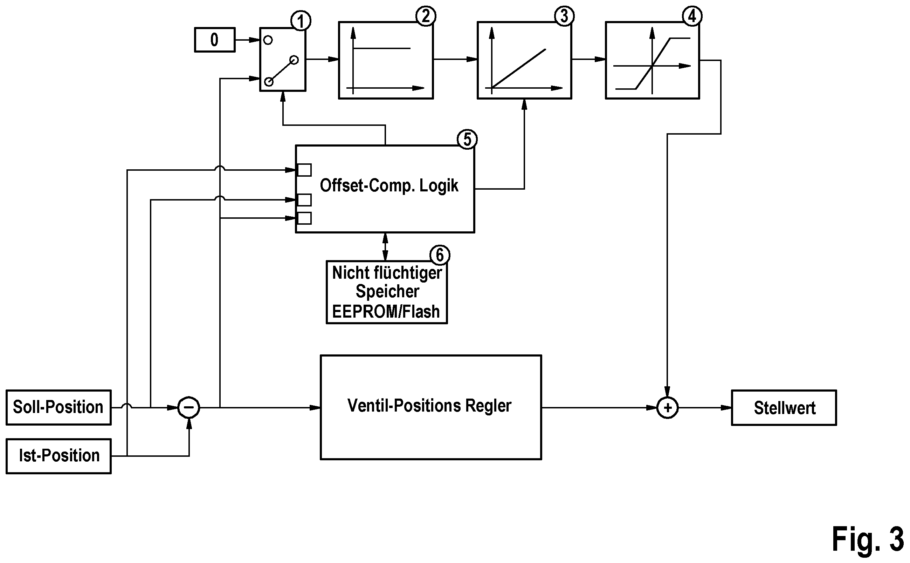

Zunächst werden, wie in Fig. 3 (links unten in der Figur) gezeigt wird, Ist- und Sollposition des Pilotventils 10 verglichen, also voneinander abgezogen. Das Ergebnis wird (wie herkömmlich) an den Ventilpositionsregler (unten Mitte) abgegeben, der daraus herkömmlich einen Stellwert und erfindungsgemäß einen ersten Anteil des Stellwerts ermittelt (unten rechts in der Fig. 3). Gleichzeitig werden die Istposition, die Sollposition und deren Abweichung an eine Offset-Kompensationslogikschaltung 5 (im Folgenden auch kurz Offset-Kompensationslogik 5) übermittelt. Diese Offset-Kompensationslogik 5 steuert (schaltet) einerseits einen Integrator 3 mit großer Zeitkonstante und andererseits einen Schalter 1, der zwischen dem Eingangswert des Positionsreglers und einem Nullwert umschaltet. Stellt die Offset-Kompensationslogik 5 nach einem "Einschwingen" fest, dass sich Soll- und Istposition nicht mehr ändern und die Hauptstufe bzw. der Verbraucher aus Fig. 2 somit stillsteht, schaltet sie über den Schalter 1 die Regelkette mit Zeitkonstante 2, Integrator 3 und Stellwert-Begrenzung 4 ein, die zum Wert des Ventilpositionsreglers addiert wird und somit den Stellwert beeinflusst.

Mit anderen Worten führt eine Abweichung zwischen Soll- und Istwert nicht nur direkt zur "herkömmlichen" Ausgabe eines Stellwerts über den Ventil-Positionsregler, um einen Offset zu kompensieren, sondern gleichzeitig zu einer Aufsummierung der aufgetretenen Fehler, die in den Stellwert einfließen, bis der Offsetfehler ausgeglichen ist. Im Einzelnen wird eine festgestellte Abweichung von Soll- und Istwert bei eingeschalteter Offset-Kompensationslogik 5 mit einem (durch die Zeitkonstante 2 veranschaulichten) mit der verstreichenden Zeit abnehmenden Faktor multipliziert. Mit anderen Worten gehen früher festgestellte Offsetfehler nur noch in weit geringerem Ausmaß in die Berechnung ein als die aktuellen Offsetfehler, allerdings werden sie im Gegensatz zum bisherigen Stand der Technik dennoch berücksichtigt. Weil sie in einem vorhergehenden Durchlauf der Steuerung bereits zu einem Ausschlag des Stellwerts geführt haben, ist zu erwarten, dass der nun dadurch erforderliche Stellwert geringer ist.

Die festgestellte Abweichung von Soll- und Istwert wird (im Integrator 3) aufintegriert. Sollte der Wert zu groß werden bzw. einen vorab festgelegten Wert überschreiten, stellt die Offset-Kompensationslogik 5 einen Fehler fest und löscht den Ausgangswert des Integrators 3. Dadurch wird ein versehentliches "Durchgehen" der Werte vermieden, falls diese beispielsweise störungsbedingt plötzlich ansteigen sollten. In diesen Fall kann die Offset-Kompensationslogik 5 zudem den Integrator 3 wieder abschalten (den Schalter 1 ausschalten), um zur "Standardberechnung" nach dem Stand der Technik zurückzugelangen. Liegt das Ergebnis der Überprüfung jedoch im zu erwartenden Bereich, wird es im Integrator 3 aufaddiert und an die Stellwert-Begrenzung 4 ausgegeben. Die Stellwert-Begrenzung 4 beschränkt einen zu großen Ausschlag (ebenfalls um ein "Durchgehen" zu verhindern) und addiert das Ergebnis ansonsten zu dem Ergebnis der "herkömmlichen" Regelung. Gemeinsam mit dem Wert vom Ventil-Positions-Regler ergibt sich so ein Stellwert für das Proportional-Stromregelventil, der durch die lange Zeitkonstante und die damit verbundenen kleineren Ausschläge um den gewünschten Wert die Positions-Offsetfehler des Piloten im laufenden Betrieb genauer als mit dem bisherigen Verfahren erfasst und kompensiert. Auf diese Weise können Pilot-Offsetfehler durch die erfindungsgemäße Steuerung über die gesamte Betriebszeit des Ventils vollständig korrigiert werden.

Zudem wird der ermittelte Regelfehler in der gezeigten Ausführungsform von der Offset-Kompensationslogik 5 regelmäßig, bei erfassten Änderungen oder kurz vor dem Ausschalten in einem nichtflüchtigen Speicher 6, beispielsweise einem EEPROM oder Flash-Speicher abgelegt. Wird die Anlage dann später wieder eingeschaltet, kann dieser abgelegte Wert als Ausgangswert der Offset-Kompensationslogik 5 genutzt werden. Dadurch kann ein dauerhaft vorhandener Offset nach dem Wiedereinschalten schneller ausgeglichen werden.

## Patentansprüche

1. Vorrichtung zur Offset-Kompensation für einen Positions-Offset eines Pilotventils (10) für ein lagegeregeltes Proportionalventil (20), die Folgendes umfasst:
- einen geschalteten Integrator (3) mit einer vorab festgelegten Zeitkonstante (2),
- eine Logikschaltung (5) zur Offset-Kompensation, die sicherstellt, dass der Integrator (3) nur aktiv ist, wenn sich weder Soll- noch Istposition des Proportionalventils (20) ändert, so dass das Proportionalventil (20) stillsteht,
- wobei der Integrator (3) mit Zeitkonstante (2) eventuelle Regelfehler aufaddiert, bis ein Offset-Fehler vollständig kompensiert ist.

2. Vorrichtung zur Offset-Kompensation nach Anspruch 1, weiter mit einem nichtflüchtigen Speicher (6) zum Ablegen des ermittelten Kompensationswerts vor dem Abschalten und zum Abruf des so abgelegten Werts beim Wiedereinschalten.

3. Vorrichtung zur Offset-Kompensation nach Anspruch 2, wobei die Logikschaltung (5) den ermittelten Kompensationswert in vorab festgelegten Intervallen im nichtflüchtigen Speicher (6) ablegt.

4. Vorrichtung zur Offset-Kompensation nach Anspruch 2, wobei die Logikschaltung (5) den ermittelten Kompensationswert bei einer durch die Logikschaltung (5) festgestellten Änderung des Kompensationswerts im nichtflüchtigen Speicher (6) ablegt.

5. Vorrichtung zur Offset-Kompensation nach einem der Ansprüche 2 bis 4, wobei die Logikschaltung (5) den ermittelten Kompensationswert zudem vor dem Abschalten im nichtflüchtigen Speicher (6) ablegt.

6. Vorrichtung zur Offset-Kompensation nach einem der vorhergehenden Ansprüche, wobei die Zeitkonstante (2) des Integrierers (3) im Bereich von 1 bis 20 Sekunden, vorzugsweise zwischen 5 und 10 Sekunden, liegt.

7. Vorrichtung zur Offset-Kompensation nach einem der vorhergehenden Ansprüche, wobei die Logikschaltung (5) bei festgestellten Störungen den Wert des Integrators (3) löscht und/oder den Integrator ausschaltet

8. Verfahren zur Offset-Kompensation für einen Positions-Offset eines Pilotventils (10) für ein lagegeregeltes Proportionalventil (20) mit den Schritten:
- Integrieren eines Offsetfehlers mit großer Zeitkonstante
- Kompensieren des Offsetfehlers mittels einer Logikschaltung (5), die sicherstellt, dass nur aktiv integriert wird, wenn sich weder Soll- noch Istposition des Proportionalventils ändert, so dass das Proportionalventil stillsteht, und
- Aufaddieren eventueller Regelfehler, bis ein Offset-Fehler vollständig kompensiert ist.

9. Verfahren nach Anspruch 8, weiter mit dem Schritt des Ablegens des so ermittelten Kompensationswerts in einem nichtflüchtigen Speicher (6) und zum Abruf des so abgelegten Werts beim Wiedereinschalten.

10. Verfahren nach Anspruch 9, wobei der ermittelte Kompensationswert in vorab festgelegten Intervallen im nichtflüchtigen Speicher (6) abgelegt wird und/oder der Kompensationswert bei einer durch die Offset-Kompensationslogik (5) festgestellten Änderung des Kompensationswerts im nichtflüchtigen Speicher (6) abgelegt wird und/oder der ermittelte Kompensationswert zudem vor dem Abschalten im nichtflüchtigen Speicher (6) abgelegt wird.

11. Verfahren nach einem der Ansprüche 8 bis 10, wobei die Zeitkonstante des Verzögerungsglieds im Bereich von 1 bis 20 Sekunden, vorzugsweise zwischen 5 und 10 Sekunden, liegt.
